# EUROPEAN PATENT SPECIFICATION

(11) **EP 3 806 391 B1**
(45) Date of publication and mention of the grant of the patent: **06.05.2026**
(21) Application number: 19815470.0
(22) Date of filing: 04.06.2019
(51) Int. Cl.: H04J 3/16, H04J 3/06

(54) **SYNCHRONIZATION INFORMATION TRANSMISSION METHOD, SENDING END DEVICE, RECEIVING END DEVICE AND STORAGE MEDIUM**
SYNCHRONISATIONSINFORMATIONSSENDEVERFAHREN, SENDEENDGERÄT, EMPFANGSENDGERÄT UND SPEICHERMEDIUM
PROCÉDÉ DE TRANSMISSION D'INFORMATIONS DE SYNCHRONISATION, DISPOSITIF TERMINAL D'ENVOI, DISPOSITIF TERMINAL DE RÉCEPTION ET SUPPORT D'INFORMATIONS

(30) Priority: 06.06.2018 CN 201810573024
(43) Date of publication of application: 14.04.2021
(73) Proprietor: China Mobile Communication Co., Ltd Research Institute, Beijing 100053 (CN); CHINA MOBILE COMMUNICATIONS GROUP CO., LTD, Beijing 100032 (CN)
(72) Inventor: HAN, Liuyan, Beijing 100032 (CN)
(74) Representative: Hertin und Partner Rechts- und Patentanwälte PartG mbB
(86) International application number: PCT/CN2019/089959
(87) International publication number: WO 2019/233403

(56) References cited:
- EP-A1- 3 923 511
- WO-A1-2018/099161
- WO-A1-2019/000241
- CN-A- 101 197 656
- CN-A- 106 612 220
- CN-A- 107 800 528
- CN-A- 107 888 345
- CN-A- 108 243 120
- US-A1- 2017 006 360
- OIF: "IA OIF-FLEXE-01.0 Flex Ethernet Implementation Agreement", 1 March 2016 (2016-03-01), pages 1 - 31, XP055459137, Retrieved from the Internet <URL:http://www.oiforum.com/wp-content/uploads/OIF-FLEXE-01.0.pdf> [retrieved on 20180314]
- ZHAN, ZHIGUO ET AL.: "Transport Network Based on FlexE Technology", TELECOMMUNICATIONS INFORMATION, no. 1, 10 January 2018 (2018-01-10), pages 1 - 17, XP009525035, ISSN: 1006-1339

## Description

### TECHNICAL FIELD

The present disclosure relates to the field of information transmission, in particular to a synchronization information transmission method, a sending end device, a receiving end device and a storage medium.

### BACKGROUND

The services of mobile communication systems and systems in financial and power sectors all require synchronization between nodes. Synchronization includes frequency synchronization and time synchronization.

According to the requirement of bandwidth transmission in the 5G era, the Flex Ethernet (FlexE) technology is proposed based on the Ethernet technology in the related art. FlexE is a lightweight Ethernet-based enhancement that enables decoupling of the Ethernet medium access control (MAC) layer rate and the Ethernet physical (PHY) layer rate.

In the basic architecture of FlexE, a FlexE group composed of multiple PHY links may be used to transmit synchronization information. However, there is no effective solution in the related art concerning how to efficiently transmit synchronization information using the PHY link of FlexE group.

Document CN 107 888 345 A, describes an opposite end receiving aFlexE protocol overhead frame transmitted by a local end, the opposite end extracting bit error state information acquired by the local end. the bit error information of both ends is reported and the physical channel with bit errors is removed from a bundle group or replaced with a backup physical channel. by an automatic switching function.

### SUMMARY

In order to solve the technical problems in the related art, embodiments of the present disclosure provide a synchronization information transmission method, a sending end device, a receiving end device.

The invention is set out in the appended set of claims.

According to the synchronization information transmission method, the sending end device, the receiving end device and the storage medium provided by the embodiments of the present disclosure, when the failure of a first PHY link used for transmitting synchronization information is detected, the sending end device switches the synchronization information to a second PHY link for transmission; the receiving end device receives, through the second PHY link, the synchronization information sent by the sending end device; the second PHY link is a PHY link other than the first PHY link in the FlexE group; the FlexE group exists between the sending end device and the receiving end device; the FlexE group includes at least two PHY links; and when the PHY link used for transmitting the synchronization information fails, since the synchronization information is switched to other PHY link in the FlexE group for transmission, the synchronization of the sending end device and the receiving end device can be kept; moreover, the synchronization tracking relationships among nodes other than the sending end device and the receiving end device will not be changed by the switching process, so that the influence on a synchronization network is reduced to the maximum extent, and the influence on the network is reduced.

### BRIEF DESCRIPTION OF THE DRAWINGS

FIG. 1 is a schematic diagram of a FlexE architecture according to an embodiment of the present disclosure;
FIG. 2 is a schematic diagram illustrating a case in which a PHY link in a FlexE group fails according to an embodiment of the present disclosure;
FIG. 3 is a schematic diagram illustrating a change in synchronization tracking relationships due to a failure of a link in a FlexE group according to an embodiment of the present disclosure;
FIG. 4 is a flow diagram of a synchronization information transmission method for a sending end device according to an embodiment of the present disclosure;
FIG. 5 is a flow diagram of a synchronization information transmission method according to an embodiment of the present disclosure;
FIG. 6 is a schematic diagram of a structure of a synchronization information transmission device provided on a sending end device according to an embodiment of the present disclosure;
FIG. 7 is a schematic diagram of a structure of a synchronization information transmission device provided on a receiving end device according to an embodiment of the present disclosure;
FIG. 8 is a schematic diagram of a structure of a sending end device according to an embodiment of the present disclosure;
FIG. 9 is a schematic diagram of a structure of a receiving end device according to an embodiment of the present disclosure;
FIG. 10 is a schematic diagram of a structure of a synchronization information transmission system according to an embodiment of the present disclosure.

### DETAILED DESCRIPTION

The present disclosure will now be described in further detail with reference to the accompanying drawings and embodiments.

It should be noted that the terms "first", "second", and the like herein are used for distinguishing between similar objects and are not necessarily for describing a particular order or precedence.

Before describing embodiments of the present disclosure, a brief introduction of the synchronization information and the basic architecture of FlexE is given.

Synchronization between devices includes time synchronization and frequency synchronization. Time transfer in a network by using a PTP protocol can meet the high precision requirement on time. The PTP time synchronization is carried out by adopting a delay computing mechanism, that is, PTP messages are exchanged between the master device port and the slave device port, so that the path delay and the time offset between the master device and the slave device are calculated, thereby enabling the time synchronization between the master device and the slave device.

Frequency synchronization can be achieved through physical layer frequency synchronization; and besides frequency signals transmitted at the physical layer, SSM synchronization status messages carrying frequency quality levels need to be transmitted between device ports.

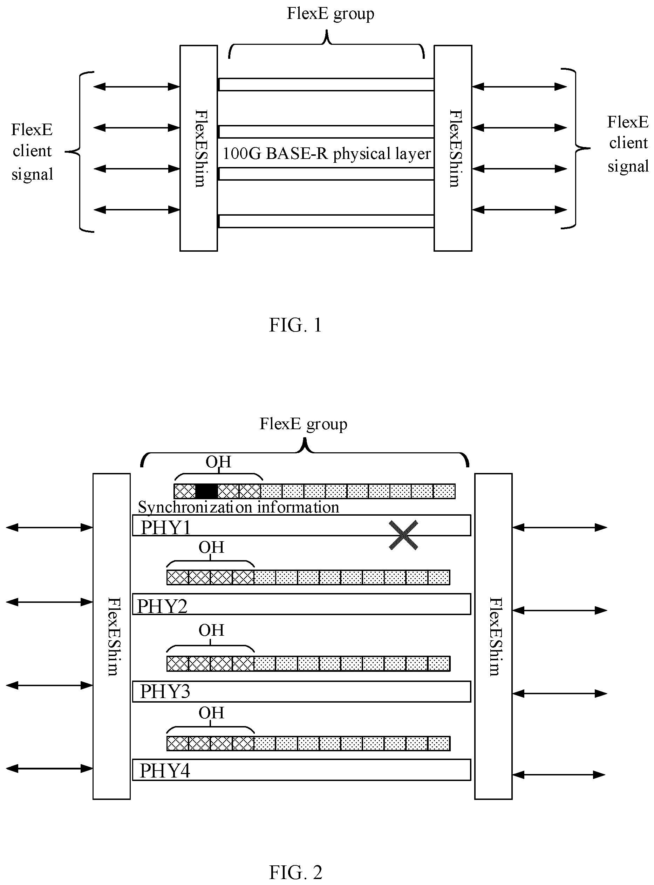

As shown in FIG. 1, FlexE mainly includes three parts, namely, FlexE Client, FlexEGroup and FlexEShim. Here, the FlexE group is composed of multiple Ethernet PHY channels, such as several 100GBASE-R PHYs. A FlexE Client (client signal) is a data stream that needs to be transmitted, and each FlexE group can include several FlexE Clients.

Each PHY channel (which may also be referred to as link) in the FlexE group carries overhead (OH). If the FlexE port needs to transmit synchronization information (including a PTP message or frequency SSM information), the synchronization information is placed in the overhead for transmission. For a FlexE group, the synchronization information is transmitted in the overhead corresponding to one of PHY links of the FlexE group.

Specifically, the sending end device may transmit in the first PHY link in the FlexE group (the PHY link is numbered 1 in the FlexE group). After receiving the information from the sending end device, the opposite end device receives the synchronization message from the overhead corresponding to the first PHY link and processes the synchronization message. The synchronization message returned by the opposite end device is also put into the overhead corresponding to the first PHY link for transmission.

On the other hand, when a PHY link in the FlexE group fails, the receiving end device cannot receive the overhead of the PHY link. Then, when the above solution is adopted to transmit the synchronization information, as shown in FIG. 2, if the PHY link (e.g., the first PHY link) used for sending the synchronization information (the data marked with black color in "OH" in FIG. 2) fails and the sending end device does not have a backup synchronization path, the receiving end device cannot receive the synchronization information, and cannot return synchronization information, thereby causing a synchronization failure, i.e., the device (the receiving end device) is losing lock. In another case, if the receiving end device provides a master clock, the sending end device needs to return a message to the receiving end device. However, synchronization information cannot be returned due to the problem of link failure, so that synchronization failure is caused, that is, the sending end device loses lock.

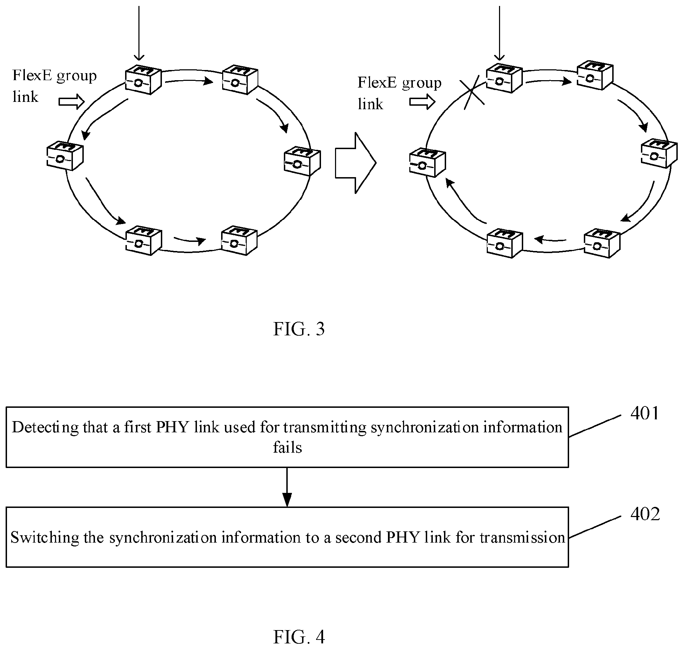

With regard to the above-mentioned problems, if there are other paths connected between the sending end device and the receiving end device besides the FlexE group link, i.e., the sending end device has a backup synchronization path, the sending end device and the receiving end device may switch to another path for synchronization. However, switching to another path usually causes a change of synchronization tracking relationships of nodes other than the two nodes, thereby impacting the synchronization performance of multiple nodes in the process of network switching, i.e., switching to another path usually causes other nodes in the network to switch, as shown in FIG. 3.

Therefore, a foundation for effective synchronization information transmission consists in maintaining synchronization when the PHY link for transmitting the synchronization information in the FlexE group fails, while reducing the influence on the synchronization network as much as possible.

In view of this, in various embodiments of the present disclosure, when a PHY link of a FlexE group fails, synchronization information is timely switched to another PHY channel in the FlexE group for transmission.

According to solutions provided by embodiments of the present disclosure, when a failure of a first PHY link for transmitting synchronization information is detected, the synchronization information is switched to a second PHY link for transmission; the second PHY link is a PHY link other than the first PHY link in the FlexE group. Since the synchronization information is switched to another PHY link in the FlexE group for transmission, the synchronization between the sending end device and the receiving end device can be kept; meanwhile, the switching process causes no change of synchronization tracking relationships among nodes other than the sending end device and the receiving end device, so that the influence on the synchronization network is reduced.

An embodiment of the present disclosure provides a synchronization information transmission method applied to a sending end device. As shown in FIG. 4, the method includes the following steps.

Step 401: detecting that a first PHY link used for transmitting synchronization information fails.

Here, synchronization may include frequency synchronization and time synchronization; accordingly, the synchronization information varies depending on different synchronization processes.

In a practical application, an event in which the first PHY link fails includes: the sending end detects a fault, or the receiving end detects a fault. When the receiving end detects a fault, the receiving end needs to report failure information of the first PHY link to the sending end device.

Therefore, in an embodiment, a specific implementation of this step can include: the sending end device detects a fault on the first PHY link, or receives the failure information of the first PHY link sent by the receiving end device.

Here, when the sending end detects a fault, the receiving end device may also detect the fault; of course, the sending end device may inform the receiving end device of the fault via a PHY link between the sending end device and the receiving end device. In a practical application, the sending end device may also inform the receiving end device of the fault through a link between the sending end device and the receiving end device other than the Flex E group.

In a practical application, if a bidirectional PHY link exists between a sending end device and a receiving end device, i.e., the two directions are on the same PHY link, then the first PHY link failure information sent by the receiving end device can be transmitted on the same PHY link, because a fault may occur in a direction from the transmitting end to the receiving end due to reasons such as insufficient optical power of the sending end device, while there is no fault in the opposite direction.

If a unidirectional PHY link exists between the sending end device and the receiving end device, i.e., the two directions are on two PHY links respectively, then the first PHY link failure information sent by the receiving end device can be sent on a link that is in the opposite direction and matches with the first PHY link.

Of course, the receiving end device may also transmit the first PHY link failure information to the sending end device through a link between the sending end device and the receiving end device other than a FlexE group.

The fault may include: optic fiber breakage, fault of an optical module (configured to emit a laser and carry signals on the laser), electrical circuit fault, loss of received messages, and the like.

Step 402: switching the synchronization information to a second PHY link for transmission.

Here, the second PHY link is a PHY link other than the first PHY link in the FlexE group; wherein the FlexE group exists between the sending end device and the receiving end device; the FlexE group includes at least two PHY links.

That is, the FlexE group is composed of multiple Ethernet PHY links, such as several 100GBASE-R PHYs.

In a practical application, the sending end device may be a master device, and correspondingly the receiving end device is a slave device. Of course, the sending end device may be a slave device, and accordingly, the receiving end device is a master device.

In order for the receiving end device to know in time which PHY link is used to transmit the synchronization information, an identifier may be set.

Therefore, in an embodiment, when switching the synchronization information to the second PHY link for transmission, the method can further include:
setting a first identifier in an overhead corresponding to the second PHY link; the first identifier is used to indicate that the synchronization information is transmitted via the second PHY link.

Correspondingly, when the sending end device transmits the synchronization information by using the second PHY link, the receiving end device may also transmit synchronization information to the sending end device by using a PHY link corresponding to the second PHY link.

Therefore, in an embodiment, the method can further include:
receiving, by the sending end device, synchronization information sent by the receiving end device through the PHY link corresponding to the second PHY link.

In a practical application, an identifier may be set so that the sending end device can know in time which PHY link is used to transmit the synchronization information of the receiving end device.

Therefore, in an embodiment, the method can further include:
parsing an overhead of the corresponding PHY link to obtain a second identifier; and
determining, based on the second identifier, that the synchronization information is transmitted via the corresponding PHY link.

That is, when synchronization information is transmitted via a PHY link in the FlexE group, a synchronization identifier is carried in an overhead to indicate that the synchronization information is transmitted via the PHY link. When it is detected that a PHY link fails and synchronization information is switched to another PHY link for transmission, the PHY link switched to carries an identifier for the transmission of synchronization information, so that the receiving end device can conveniently know which PHY link carries the synchronization information. Correspondingly, when the receiving end device transmits a synchronization message, the sent synchronization message is also switched to a corresponding PHY link for transmission, and the PHY link switched to carries an identifier for the transmission of the synchronization information.

In a practical application, a bit in the overhead may be used to identify whether the PHY link is transmitting synchronization information. For example, an identifier value of 1 denotes that the PHY link is transmitting synchronization information, and an identifier value of 0 denotes the PHY link is not used to transmit synchronization information.

For example, assuming that the FlexE group is composed of four PHY links and synchronization information is initially transmitted on the first PHY link (the PHY link numbered 1), then only the synchronization identifier in the overhead of the first PHY link is 1, and the synchronization identifiers in the overheads of the second to fourth PHY links (the PHY links numbered 2, 3, and 4, respectively) are 0. When the first PHY link fails, the transmission is switched to the second PHY link, and then the synchronization identifier in the overhead of the second PHY link is 1, and the synchronization identifiers in the overheads of the third PHY link and the fourth PHY link are 0.

Correspondingly, for the FlexE group used for the transmission from the receiving end device to the sending end, in the same way, only the synchronization identifier in the overhead of the first PHY link is 1 initially, and the synchronization identifiers in the overheads of the second to fourth PHY links (the PHY links numbered 2, 3 and 4 respectively) are 0. After a fault occurs, the synchronization identifier in the overhead of the second PHY link is set to 1, and the synchronization identifiers in the overheads of the third and fourth PHY links are 0.

In an embodiment, when the synchronization information is switched to a second PHY link for transmission, the method may further include:
selecting a PHY link from the FlexE group as the second PHY link according to a link switching rule.

Here, the link switching rule may be: PHY links are switched to sequentially according to a numbering sequence of PHY links in the FlexE group. For example, assuming that synchronization information is transmitted via a PHY link numbered 1 in the FlexE group, when failure of the PHY link numbered 1 is detected, the synchronization information is switched to a PHY link numbered 2 for transmission.

Therefore, in an embodiment, the selecting a PHY link from the FlexE group as the second PHY link according to the link switching rule includes:
selecting a corresponding PHY link as the second PHY according to a numbering sequence of PHY links in the FlexE group.

In a practical application, the link switching rule can also be: PHY links are switched to sequentially according to link priorities of PHY links in the FlexE group. For example, assuming that synchronization information is transmitted via a PHY link numbered 1 in the FlexE group, when failure of the PHY link numbered 1 is detected, since a PHY link numbered 3 has a higher priority, the synchronization information is switched to the PHY link numbered 3 with higher priority for transmission.

In a practical application, when it is detected that a failed PHY link which is originally used to transmit the synchronization information returns to normal, the PHY link can be reinstated as the PHY link for transmitting the synchronization information.

Therefore, in an embodiment, the method can further include:
restoring the synchronization information to the first PHY link for transmission when it is detected that the first PHY link returns to normal.

Here, in a practical application, the first PHY link may be a PHY link used by default to transmit synchronization information between the sending end device and the receiving end device.

Then, in this case, when the first PHY link returns to normal, the sending end device directly restores the synchronization information to the first PHY link for transmission.

Of course, the first PHY link may not be a PHY link used by default to transmit synchronization information.

Then, in this case, the sending end device needs to timely inform the receiving end device that synchronization information is transmitted via the first PHY link.

Therefore, in an embodiment, when restoring the synchronization information to the first PHY link for transmission, the method can further include:
setting a first identifier in an overhead corresponding to the first PHY link, the first identifier being used to indicate that the synchronization information is transmitted via the first PHY link.

Correspondingly, an embodiment of the disclosure further provides a synchronization information transmission method applied to a receiving end device. The method includes:
receiving synchronization information sent by the sending end device through a second PHY link.

Here, the synchronization information received through the second PHY link is sent by a sending end device when it is detected that a first PHY link for transmitting the synchronization information fails.

Of course, as stated above, the second PHY link is a PHY link other than the first PHY link in the FlexE group; wherein, the FlexE group exists between the sending end device and the receiving end device; the FlexE group includes at least two PHY links.

In a practical application, when the receiving end device detects a fault on the first PHY, the receiving end device may report failure information of the first PHY link to the sending end device, so that the sending end device may timely learn that the first PHY link fails, thereby ensuring the synchronization process.

Therefore, in an embodiment, the method can further include:
sending failure information of the first PHY link to the sending end device when a fault on the first PHY link is detected.

In order for the receiving end device to know in time which PHY link is used to transmit the synchronization information, an identifier may be set.

Therefore, in an embodiment, when receiving, through the first PHY link, the synchronization information sent by the sending end device, the method further includes:
parsing an overhead corresponding to the second PHY link to obtain a first identifier; and
determining, based on the first identifier, that the synchronization information is transmitted via the second PHY link.

Correspondingly, the receiving end device may also send synchronization information to the sending end device by using a PHY link corresponding to the second PHY link.

Therefore, in an embodiment, the method can further include:
sending synchronization information to the sending end device through a PHY link corresponding to the second PHY link.

In a practical application, by setting an identifier, the information as to which PHY link is used to transmit the synchronization information of the receiving end device may be timely conveyed to the sending end device.

Therefore, in an embodiment, when sending the synchronization information, the method may further include:
setting a second identifier in an overhead of the corresponding PHY link; the second identifier is used for indicating that the synchronization information is transmitted via the corresponding PHY link.

That is, when a PHY link in the FlexE group is used to transmit synchronization information, an identifier is carried in the overhead to indicate that synchronization information is transmitted via the PHY link. When it is detected that a PHY link fails and synchronization information is switched to another PHY link for transmission, the PHY link switched to carries an identifier for the transmission of the synchronization information, so that the receiving end device can conveniently know which PHY link carries the synchronization information. Correspondingly, when the receiving end device sends a synchronization message, the sent synchronization message is also switched to a corresponding PHY link for transmission, and the PHY link switched to carries an identifier for the transmission of the synchronization information.

In a practical application, in the course of tracking, by the receiving end device, synchronization information from a FlexE group port, when it is detected that a PHY link used for transmitting the synchronization information in a FlexE group fails, the receiving end device waits for the synchronization information to be switched to another PHY link in the FlexE group for transmission, and in the meantime, the receiving end device does not switch to and track a port other than the FlexE group port. In other words, the receiving end device may track a port of the FlexE group within a time period from when it is detected that the first PHY link fails to when the synchronization information is switched to the second PHY link for transmission.

That is, during this time period, the receiving end device may preferentially track the FlexE group port.

Specifically, a port of the FlexE group is preferentially tracked within a time period from when it is detected that the first PHY link fails to when the synchronization information is switched to the second PHY link for transmission in a case that there is a link between the sending end device and the receiving end device other than the FlexE group path.

In an embodiment, the preferentially tracking the FlexE group port can be achieved by setting a wait delay duration, or achieved by setting a link priority.

Here, for the process of preferentially tracking a port of the FlexE group by setting the wait delay duration, in a practical application, a timer may be set. The timer is started when the first PHY link fails, and attempts are made to track a port of the FlexE group within the duration of the timer. Attempts are made to track a port of other link when the timer expires and if the tracking fails.

For the process of preferential tracking a port of the FlexE group by setting a link priority, in a practical application, a priority of the FlexE group path can be set to be higher than those of other links, so that after the first PHY link fails, during the period in which the receiving end device waits for the synchronization information to be switched to another PHY link in the FlexE group for transmission, attempts are made to preferentially track a port of the FlexE group.

In a practical application, when it is detected that a failed PHY link which is originally used to transmit the synchronization information returns to normal, the PHY link can be reinstated as the PHY link for transmitting the synchronization information.

Therefore, in an embodiment, the method can further include:
receiving, through a first PHY link, synchronization information sent by the sending end device; the synchronization information received through the first PHY link is sent by the sending end device when it is detected that the first PHY link returns to normal.

Here, in a practical application, the first PHY link may be a PHY link used by default to transmit synchronization information between the sending end device and the receiving end device.

Then, in this case, when the first PHY link returns to normal, the sending end device directly restores the synchronization information to the first PHY link for transmission.

Of course, the first PHY link may not be the PHY link used by default to transmit synchronization information.

Then, in this case, the sending end device needs to timely inform the receiving end device that synchronization information is transmitted via the first PHY link.

Therefore, in an embodiment, when receiving, through the first PHY link, the synchronization information sent by the sending end device, the method can further include:
parsing an overhead corresponding to the first PHY link to obtain a first identifier; and
determining, based on the first identifier, that the synchronization information sent by the sending end device is transmitted via the first PHY link.

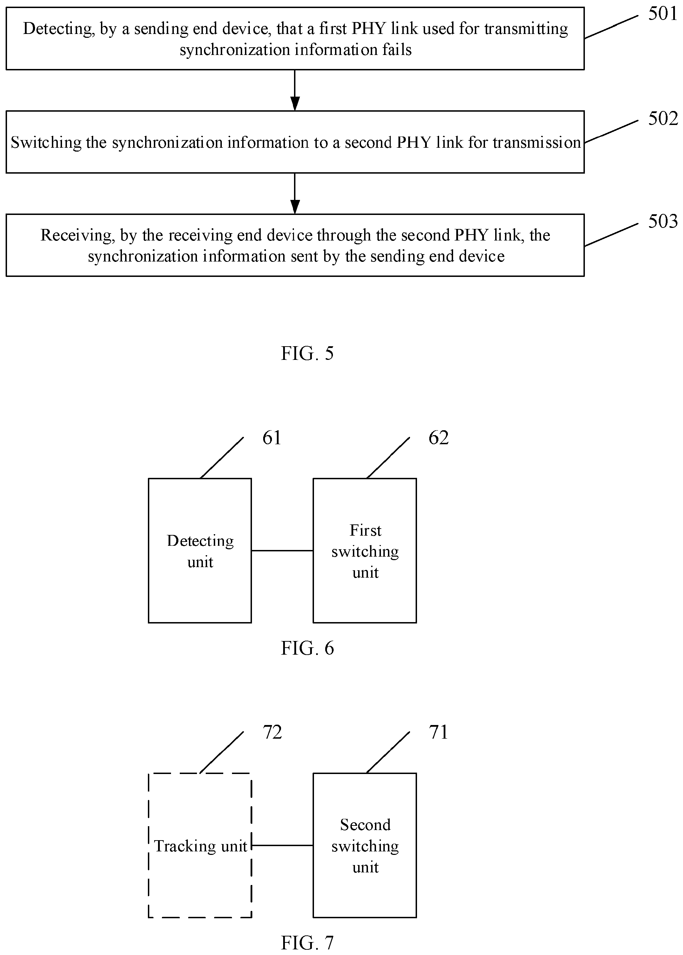

An embodiment of the present disclosure further provides a synchronization information transmission method. As shown in FIG. 5, the method includes the following steps.
Step 501: detecting, by a sending end device, that a first PHY link used for transmitting synchronization information fails;
Step 502: switching, by the sending end device, the synchronization information to a second PHY link for transmission; and
Step 503: receiving, by the receiving end device through the second PHY link, the synchronization information sent by the sending end device.

The second PHY link is a PHY link other than the first PHY link in the FlexE group; wherein, the FlexE group exists between the sending end device and the receiving end device; the FlexE group includes at least two PHY links.

It is noted that the specific processes of the sending end device and the receiving end device have been described in detail above, and will not be described in detail here.

According to the synchronization information transmission method provided by the embodiment of the present disclosure, when the failure of a first PHY link used for transmitting synchronization information is detected, the sending end device switches the synchronization information to a second PHY link for transmission; the receiving end device receives, through the second PHY link, the synchronization information sent by the sending end device; the second PHY link is a PHY link other than the first PHY link in the FlexE group; the FlexE group exists between the sending end device and the receiving end device; the FlexE group includes at least two PHY links; and when the PHY link used for transmitting the synchronization information fails, since the synchronization information is switched to other PHY link in the FlexE group for transmission, the synchronization of the sending end device and the receiving end device can be kept; moreover, the synchronization tracking relationships among nodes other than the sending end device and the receiving end device will not be changed by the switching process, so that the influence on a synchronization network is reduced to the maximum extent, and the influence on the network is reduced.

In addition, when the synchronization information is transmitted, an identifier is set in the overhead corresponding to the PHY link and is used for indicating which PHY link is used to transmit the synchronization information, so that the receiving end can know which PHY link is used to transmit the synchronization information in time, and the synchronization between the two devices is further ensured.

In addition, the receiving end device waits for the synchronization information to be switched to another PHY link in the FlexE group for transmission, and in the meantime, the receiving end device does not switch to and track a port other than the FlexE group port. Since the receiving end device does not switch to and track a port other than the FlexE group port during the period in which the receiving end device waits for the synchronization information to be switched to another PHY link in the FlexE group for transmission, that is, the receiving end device can track a port of the FlexE group preferentially, it can be ensured that the switching process does not cause synchronization tracking relationships among nodes other than the sending end device and the receiving end device to change, thereby the influence on a synchronization network can be reduced to the maximum extent.

In order to implement the method for the sending end device according to the embodiment of the present disclosure, an embodiment of the present disclosure further provides a synchronization information transmission device. The synchronization information transmission device is provided on a sending end device, and as shown in FIG. 6, includes:
a detecting unit 61;
a first switching unit 62, configured to switch the synchronization information to a second PHY link for transmission when the detecting unit 61 detects that the first PHY link for sending the synchronization information fails; the second PHY link is a PHY link other than the first PHY link in the FlexE group; wherein,
the FlexE group exists between the sending end device and the receiving end device; the FlexE group includes at least two PHY links.

In a practical application, an event in which the first PHY link fails includes: the sending end detects a fault, or the receiving end detects a fault. When the receiving end detects a fault, the receiving end needs to report failure information of the first PHY link to the sending end device..

Therefore, in an embodiment, the detecting unit 61 is configured to: detect a fault on the first PHY link; or receive failure information of the first PHY link sent by the receiving end device.

In order for the receiving end device to know in time which PHY link is used to transmit the synchronization information, an identifier may be set.

Therefore, in an embodiment, the first switching unit 62 is further configured to set a first identifier in an overhead corresponding to the second PHY link; the first identifier is used to indicate that the synchronization information is transmitted via the second PHY link.

Correspondingly, when the sending end device transmits the synchronization information by using the second PHY link, the receiving end device may also transmit synchronization information to the sending end device by using the PHY link corresponding to the second PHY link.

Therefore, in an embodiment, the first switching unit 62 is further configured to receive, through the PHY link corresponding to the second PHY link, synchronization information sent by the receiving end device.

In a practical application, by setting an identifier, the information as to which PHY link is used to transmit the synchronization information of the receiving end device may be timely conveyed to the sending end device.

Therefore, in an embodiment, the first switching unit 62 is further configured to parse an overhead of the corresponding PHY link to obtain a second identifier, and determine, based on the second identifier, that the synchronization information is transmitted via the corresponding PHY link.

In an embodiment, the first switching unit 62 is further configured to select a PHY link from the FlexE group as the second PHY link according to a link switching rule.

Here, the link switching rule may be: PHY links are switched to sequentially according to a numbering sequence of PHY links in the FlexE group. For example, assuming that synchronization information is transmitted via a PHY link numbered 1 in the FlexE group, when failure of the PHY link numbered 1 is detected, the synchronization information is switched to a PHY link numbered 2 for transmission.

Therefore, in an embodiment, the first switching unit 62 is specifically configured to:
select a corresponding PHY link as the second PHY according to a numbering sequence of PHY links in the FlexE group.

In a practical application, the link switching rule can also be: PHY links are switched to sequentially according to link priorities of PHY links in the FlexE group. For example, assuming that synchronization information is transmitted via a PHY link numbered 1 in the FlexE group, when failure of the PHY link numbered 1 is detected, the synchronization information is switched to the PHY link numbered 2 with high priority for transmission.

In a practical application, when it is detected that a failed PHY link which is originally used to transmit the synchronization information returns to normal, the PHY link can be reinstated as the PHY link for transmitting the synchronization information.

Therefore, in an embodiment, the first switching unit 62 is further configured to restore the synchronization information to the first PHY link for transmission when the detecting unit 61 detects that the first PHY link returns to normal.

Here, in a practical application, the first PHY link may be a PHY link used by default to transmit synchronization information between the sending end device and the receiving end device.

Then, in this case, when the first PHY link returns to normal, the first switching unit 62 directly restores the synchronization information to the first PHY link for transmission.

Of course, the first PHY link may not be the PHY link used by default to transmit synchronization information.

Then, in this case, the first switching unit 62 needs to timely inform the receiving end device that synchronization information is transmitted via the first PHY link.

Therefore, in an embodiment, the first switching unit 62 is further configured to set a first identifier in an overhead corresponding to the first PHY link; the first identifier is used to indicate that the synchronization information is transmitted via the first PHY link.

In a practical application, the detecting unit 61 and the first switching unit 62 may be implemented by a processor in a synchronization information transmission device in combination with a communication interface.

In order to implement the method for receiving end device according to the embodiment of the present disclosure, an embodiment of the present disclosure further provides a synchronization information transmission device. The synchronization information transmission device is provided on the sending end device, and as shown in FIG. 7, includes:
a second switching unit 71, configured to receive synchronization information sent by the sending end device through a second PHY link; the synchronization information received through the second PHY link is sent by the sending end device when it is detected that the first PHY link used for transmitting the synchronization information fails; the second PHY link is a PHY link other than the first PHY link in the FlexE group; wherein,
the FlexE group exists between the sending end device and the receiving end device; the FlexE group includes at least two PHY links.

In order for the receiving end device to know in time which PHY link is used to transmit the synchronization information, an identifier may be set.

Therefore, in an embodiment, the second switching unit 71 is further configured to:
parse an overhead corresponding to the second PHY link to obtain a first identifier;
determine, based on the first identifier, that the synchronization information is transmitted via the second PHY link.

Correspondingly, the receiving end device may also transmit synchronization information to the sending end device by using a PHY link corresponding to the second PHY link.

Therefore, in an embodiment, the second switching unit 71 is further configured to transmit synchronization information to the sending end device through a PHY link corresponding to the second PHY link.

In a practical application, by setting an identifier, the information as to which PHY link is used to transmit the synchronization information of the receiving end device may be timely conveyed to the sending end device.

Therefore, in an embodiment, the second switching unit 71 is further configured to set a second identifier in the overhead of the corresponding PHY link; the second identifier is used for indicating that the synchronization information is transmitted via the corresponding PHY link.

In a practical application, in the process of tracking the synchronization information from the flexE group port by the receiving end device, when it is detected that the PHY link used for transmitting the synchronization information in the FlexE group fails, the receiving end device waits for the synchronization information to be switched to another PHY link in the FlexE group for transmission, and in the meantime, the receiving end device does not switch to and track a port other than the FlexE group port. In other words, as shown in FIG. 7, the device may further include: a tracking unit 72, configured to track a port of the FlexE group within a time period from when it is detected that the first PHY link fails to when the synchronization information is switched to the second PHY link for transmission.

That is, during this time period, the tracking unit 72 may preferentially track the port of the FlexE group.

Specifically, the tracking unit 72 preferentially tracks the port of the FlexE group within a time period from when it is detected that the first PHY link fails to when the synchronization information is switched to the second PHY link for transmission in a case that there is a link between the sending end device and the receiving end device other than the FlexE group path.

In an embodiment, the FlexE group port can be tracked preferentially by setting a wait delay duration; or the FlexE group port can be tracked preferentially by setting a link priority.

In a practical application, when it is detected that a failed PHY link which is originally used to transmit the synchronization information returns to normal, the PHY link can be reinstated as the PHY link for transmitting the synchronization information.

Therefore, in an embodiment, the second switching unit 71 is further configured to receive, through a first PHY link, synchronization information sent by the sending end device; the synchronization information received through the first PHY link is sent by the sending end device when it is detected that the first PHY link returns to normal.

Here, in a practical application, the first PHY link may be a PHY link used by default to transmit synchronization information between the sending end device and the receiving end device.

Then, in this case, when the first PHY link returns to normal, the sending end device directly restores the synchronization information to the first PHY link for transmission.

Of course, the first PHY link may not be the PHY link used by default to transmit synchronization information.

Then, in this case, the sending end device needs to timely inform the receiving end device that synchronization information is transmitted via the first PHY link.

Therefore, in an embodiment, the second switching unit 71 is further configured to parse an overhead corresponding to the first PHY link to obtain a first identifier when receiving the synchronization information sent by the sending end device, and determine, based on the first identifier, that the synchronization information sent by the sending end device is transmitted via the first PHY link.

In a practical application, when the receiving end device detects a fault on the first PHY, failure information of the first PHY link can be reported to the sending end device, so that the sending end device can timely learn that the first PHY link fails, thereby ensuring the synchronization process.

Therefore, in an embodiment, the device can further include a sending unit configured to receive, through the first PHY link, the synchronization information sent by the sending end device; the synchronization information received through the first PHY link is sent by the sending end device when it is detected that the first PHY link returns to normal.

In a practical application, the second switching unit 71, the tracking unit 72 and the sending unit can be implemented by a processor in a synchronization information transmission device in combination with a communication interface.

It is noted that, the synchronization information transmission is illustrated exemplarily with a division of the foregoing program modules of the synchronization information transmit device provided in the foregoing embodiment. In a practical application, the foregoing processing can be distributed to be performed by different program modules as needed, i.e., the internal structure of the device is divided into different program modules to perform all or a part of the aforementioned processing. In addition, the synchronization information transmission device provided by the foregoing embodiment and the synchronization information transmission method embodiment are of the same design, and the specific implementation process of the synchronization information transmission device is detailed in the method embodiment and will not be described in detail here.

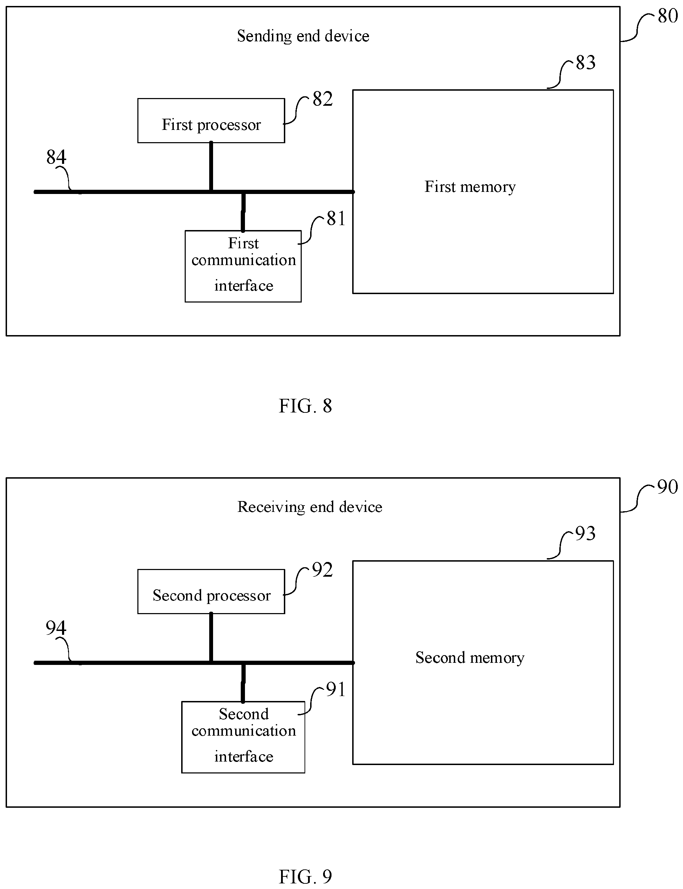

Based on the hardware implementation of the program modules, and in order to implement the method of the embodiment of the present disclosure, an embodiment of the present disclosure further provides a sending end device. As shown in FIG. 8, the sending end device 80 includes:
a first communication interface 81, capable of exchanging information with a receiving end device;
a first processor 82, connected to the first communication interface 81 to realize information exchange with the receiving end device, and configured to execute a computer program to implement the methods provided by one or more technical solutions for the sending end device. The computer program is stored on a first memory 83.

Specifically, the first communication interface 81 is configured to switch the synchronization information to the second PHY link for transmission under control of the first processor 82 when it is detected that a first PHY link used for transmitting the synchronization information fails; the second PHY link is a PHY link other than the first PHY link in the FlexE group; wherein,
the FlexE group exists between the sending end device and the receiving end device; the FlexE group includes at least two PHY links.

In a practical application, an event in which the first PHY link fails includes: the sending end detects a fault, or the receiving end detects a fault. When the receiving end detects the fault, the receiving end needs to report failure information of the first PHY link to the sending end device.

Therefore, in an embodiment, the first processor 82 is configured to: detect a fault on the first PHY link; or receive, through the first communication interface 81, failure information of the first PHY link sent by the receiving end device.

In order for the receiving end device to know in time which PHY link is used to transmit the synchronization information, an identifier may be set.

Therefore, in an embodiment, the first processor 82 is configured to setting a first identifier in an overhead corresponding to the second PHY link; the first identifier is used to indicate that the synchronization information is transmitted via the second PHY link.

Correspondingly, when the sending end device transmits the synchronization information by using the second PHY link, the receiving end device may also transmit the synchronization information to the sending end device by using the PHY link corresponding to the second PHY link.

Therefore, in an embodiment, the first communication interface 81 is further configured to receive, through a PHY link corresponding to the second PHY link, synchronization information sent by the receiving end device.

In a practical application, by setting an identifier, the information as to which PHY link is used to transmit the synchronization information of the receiving end device may be timely conveyed to the sending end device.

Therefore, in an embodiment, the first processor 82 is configured to parse an overhead of the corresponding PHY link to obtain a second identifier, and determine, based on the second identifier, that the synchronization information is transmitted via the corresponding PHY link.

In an embodiment, the first processor 82 is further configured to select a PHY link from the FlexE group as the second PHY link according to a link switching rule.

Here, the link switching rule may be: PHY links are switched to sequentially according to a numbering sequence of PHY links in the FlexE group. For example, assuming that synchronization information is transmitted via a PHY link numbered 1 in the FlexE group, when failure of the PHY link numbered 1 is detected, the synchronization information is switched to a PHY link numbered 2 for transmission.

Therefore, in an embodiment, the first processor 82 is specifically configured to:
select a corresponding PHY link as the second PHY according to a numbering sequence of PHY links in the FlexE group.

In a practical application, the link switching rule can also be: PHY links are switched to sequentially according to link priorities of PHY links in the FlexE group. For example, assuming that synchronization information is transmitted via a PHY link numbered 1 in the FlexE group, when failure of the PHY link numbered 1 is detected, the synchronization information is switched to the PHY link numbered 2 with high priority for transmission.

In a practical application, when it is detected that a failed PHY link which is originally used to transmit the synchronization information returns to normal, the PHY link can be reinstated as the PHY link for transmitting the synchronization information.

Therefore, in an embodiment, the first communication interface 81 is further configured to restore the synchronization information to the first PHY link for transmission under control of the first processor 82 when it is detected that the first PHY link returns to normal.

Here, in a practical application, the first PHY link may be a PHY link used by default to transmit synchronization information between the sending end device and the receiving end device.

Then, in this case, when the first PHY link returns to normal, the first switching unit 62 directly restores the synchronization information to the first PHY link for transmission.

Of course, the first PHY link may not be the PHY link used by default to transmit synchronization information.

Then, in this case, the sending end device needs to timely inform the receiving end device that synchronization information is transmitted via the first PHY link.

Therefore, in an embodiment, the first processor 82 is further configured to set a first identifier in an overhead corresponding to the first PHY link; the first identifier is used to indicate that the synchronization information is transmitted via the first PHY link.

It is noted that, for detail of the specific processing of the first processor 82, reference may be made to the method embodiments, and detail thereof will not be described herein.

Of course, in a practical application, various components in the sending end device 80 are coupled together by a bus system 84. It will be appreciated that bus system 84 is configured to enable connection communication between these components. In addition to a data bus, bus system 84 includes a power bus, a control bus, and a status signal bus. However, for clarity of illustration, the various buses are all labeled as bus system 84 in FIG. 8.

The first memory 83 in the embodiment of the present disclosure is configured to store various types of data to support the operation of the sending end device 80. Examples of such data include any computer program configured to operate on the sending end device 80.

The methods disclosed in the foregoing embodiments of the present disclosure may be applied to or implemented by the first processor 82. The first processor 82 may be an integrated circuit chip having signal processing capabilities. In implementation, the steps of the method described above may be performed by integrated logic circuitry in hardware form or instructions in software form in the first processor 82. The first processor 82 described above may be a general purpose processor, a digital signal processor (DSP), or other programmable logic device, discrete gate or transistor logic device, discrete hardware component, etc. The first processor 82 may implement or perform the methods, steps, and logic block diagrams disclosed in embodiments of the present disclosure. A general-purpose processor may be a microprocessor, any conventional processor, or the like. The steps of the method disclosed in connection with the embodiments of the present disclosure may be embodied directly as being performed by a hardware decoding processor or performed by a combination of hardware and software modules in the decoding processor. The software module may reside in a storage medium located in the first memory 83, and the first processor 82 reads the information in the first memory 83 and performs the steps of the aforementioned method with its hardware.

The sending end device 80 may be implemented by one or more application specific integrated circuits (ASICs), DSPs, programmable logic devices (PLDs), complex programmable logic devices (CPLDs), field-programmable gate arrays (FPGAs), general purpose processors, controllers, micro controller units (MCUs), microprocessors, or other electronic devices to perform the foregoing methods.

Based on the hardware implementation of the program modules, and in order to implement the method for receiving end device according to the embodiment of the present disclosure, an embodiment of the present disclosure provides a receiving end device. As shown in FIG. 9, the receiving end device 90 includes:
a second communication interface 91, capable of exchanging information with the sending end device;
a second processor 92, connected to the second communication interface 91 to realize information exchange with the sending end device, and configured to execute a computer program to implement the methods provided by one or more technical solutions for the receiving end device. The computer program is stored in the second memory 93.

Specifically, the second communication interface 91 is configured to, under control of the second processor 92, receive, through a second PHY link, synchronization information sent by a sending end device; the synchronization information received through the second PHY link is sent by the sending end device when it is detected that the first PHY link used for transmitting the synchronization information fails; the second PHY link is a PHY link other than the first PHY link in the FlexE group; wherein,
the FlexE group exists between the sending end device and the receiving end device; the FlexE group includes at least two PHY links.

In order for the receiving end device to know in time which PHY link is used to transmit the synchronization information, an identifier may be set.

Therefore, in an embodiment, the second processor 92 is configured to:
parse an overhead corresponding to the second PHY link to obtain a first identifier; and
determine, based on the first identifier, that the synchronization information is transmitted via the second PHY link.

Correspondingly, the receiving end device 90 may also transmit synchronization information to the sending end device by using a PHY link corresponding to the second PHY link.

Therefore, in an embodiment, the second communication interface 91 is further configured to transmit synchronization information to the sending end device through a PHY link corresponding to the second PHY link.

In a practical application, by setting an identifier, the information as to which PHY link is used to transmit the synchronization information of the receiving end device may be timely conveyed to the sending end device.

The second processor 92 is further configured to set a second identifier in the overhead of the corresponding PHY link; the second identifier is used for indicating that the synchronization information is transmitted via the corresponding PHY link.

In a practical application, in the course of tracking, by the receiving end device, synchronization information from a FlexE group port, when it is detected that a PHY link used for transmitting the synchronization information in a FlexE group fails, the receiving end device waits for the synchronization information to be switched to another PHY link in the FlexE group for transmission, and in the meantime, the receiving end device does not switch to and track a port other than the FlexE group port. In other words, the second processor 92 is further configured to track a port of the FlexE group within a time period from when it is detected that the first PHY link fails to when the synchronization information is switched to the second PHY link for transmission.

That is, during this time period, the second processor 92 may preferentially track a port of the FlexE group.

Specifically, the second processor 92 preferentially tracks a port of the FlexE group within a time period from when it is detected that the first PHY link fails to when the synchronization information is switched to the second PHY link for transmission in a case that there is a link between the sending end device and the receiving end device other than the FlexE group path.

In an embodiment, the FlexE group port can be tracked preferentially by setting a wait delay duration; or the FlexE group port can be tracked preferentially by setting a link priority.

In a practical application, when it is detected that a failed PHY link which is originally used to transmit the synchronization information returns to normal, the PHY link can be reinstated as the PHY link for transmitting the synchronization information.

Therefore, in an embodiment, the second communication interface 91 is further configured to receive, through a first PHY link, synchronization information sent by the sending end device; the synchronization information received through the first PHY link is sent by the sending end device when it is detected that the first PHY link returns to normal.

Here, in a practical application, the first PHY link may be a PHY link used by default to transmit synchronization information between the sending end device and the receiving end device.

Then, in this case, when the first PHY link returns to normal, the sending end device directly restores the synchronization information to the first PHY link for transmission.

Of course, the first PHY link may not be the PHY link used by default to transmit synchronization information.

Then, in this case, the sending end device needs to timely inform the receiving end device that synchronization information is transmitted via the first PHY link.

Therefore, in an embodiment, the second processor 92 is further configured to parse an overhead corresponding to the first PHY link to obtain a first identifier and determine, based on the first identifier, that the synchronization information sent by the sending end device is transmitted via the first PHY link.

In a practical application, when the receiving end device detects a fault on the first PHY, failure information of the first PHY link can be reported to the sending end device, so that the sending end device can timely learn that the first PHY link fails, thereby ensuring the synchronization process.

Therefore, in an embodiment, the second communication interface 91 is further configured to send failure information of the first PHY link to the sending end device when a fault on the first PHY link is detected.

It is noted that, for detail of the specific processing of the second processor 92, reference may be made to the method embodiments, and detail thereof will not be described herein.

Of course, in a practical application, various components in the receiving end device 90 are coupled together by a bus system 94. It will be appreciated that bus system 94 is configured to enable connection communication between these components. In addition to a data bus, the bus system 94 includes a power bus, a control bus, and a status signal bus. However, for clarity of illustration, the various buses are all labeled as bus system 94 in FIG. 9.

The second memory 93 in the embodiment of the present disclosure is configured to store various types of data to support the operation of the receiving end device 90. Examples of such data include any computer program configured to operate on the receiving end device 90.

The methods disclosed in the foregoing embodiments of the present disclosure may be applied to or implemented by the second processor 92. The second processor 92 may be an integrated circuit chip having signal processing capabilities. In implementation, the steps of the method described above may be performed by integrated logic circuitry in hardware form or instructions in software form in the second processor 92. The second processor 92 described above may be a general purpose processor, a DSP, or other programmable logic device, discrete gate or transistor logic device, discrete hardware component, etc. The second processor 92 may implement or perform the methods, steps, and logic block diagrams disclosed in the embodiments of the present disclosure. A general-purpose processor may be a microprocessor, any conventional processor, or the like. The steps of the method disclosed in connection with the embodiments of the present disclosure may be embodied directly as being performed by a hardware decoding processor or performed by a combination of hardware and software modules in the decoding processor. The software module may reside in a storage medium located in the second memory 93, and the second processor 92 reads the information in the second memory 93 and performs the steps of the aforementioned method with its hardware.

The receiving end device 90 may be implemented by one or more ASICs, DSPs, PLDs, CPLDs, FPGAs, general purpose processors, controllers, MCUs, microprocessors, or other electronic components to perform the methods described above.

It will be appreciated that the memories (first memory 83 and second memory 93) in embodiments of the present disclosure may be volatile memory or non-volatile memory, and may also include both volatile and non-volatile memories. The nonvolatile memory may be a read only memory (ROM), programmable read-only memory (PROM), erasable programmable read-only memory (EPROM), electrically erasable programmable read-only memory (EEPROM), ferromagnetic random access memory (FRAM), flash memory, magnetic surface memory, optical disc, or compact disc read-only memory (CD-ROM); wherein the magnetic surface memory may be a magnetic disk storage or a magnetic tape storage. The volatile memory may be a random access memory (RAM), which acts as an external cache. By way of illustration and not limitation, many forms of RAMs are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory ESDRAM), synclink dynamic random access memory (SLDRAM), direct rambus random access memory (DRRAM). The memories described in embodiments of the present disclosure are intended to include, but are not limited to, these and any other suitable types of memories.

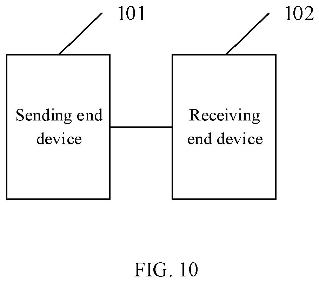

In order to realize the methods of the embodiments of the present disclosure, a synchronization information transmission system is described, the system is not covered by the scope of the claims. As shown in FIG. 10, the system includes:
a sending end device 101, configured to switch the synchronization information to a second PHY link for transmission when it is detected that a first PHY link used for transmitting the synchronization information fails;
a receiving end device 102, configured to receive, through the second PHY link, the synchronization information sent by the sending end device 101.

The second PHY link is a PHY link other than the first PHY link in the FlexE group; wherein,
the FlexE group exists between the sending end device 101 and the receiving end device 102; the FlexE group includes at least two PHY links.

It is noted that the specific processing of the sending end device 101 and the receiving end device 102 have been described in detail above, and will not be described in detail here.

A computer storage medium, in particular a computer readable storage medium is described but it is not covered by the scope of the claims. For example, the storage medium includes a first memory 83 storing a computer program. The computer program is executable by the first processor 82 of the sending end device 80 to perform the steps of the aforementioned method for a sending end device. As another example, the storage medium includes a second memory 93 storing a computer program. The computer program is executable by the second processor 92 of the receiving end device 90 to perform the steps of the aforementioned method for a receiving end device. The computer readable storage medium may be a storage such as RAM, ROM, PROM, EPROM, EEPROM, flash memory, magnetic surface memory, optical disc, or CD-ROM.

It is noted that, without incurring conflict, the technical solutions described in the embodiments of the present disclosure may be combined and are only limited by the scope of the appended claims.

## Claims

1. A synchronization information transmission method, performed by a sending end device, the method comprising:
switching (402) synchronization information to a second PHY link for transmission when it is detected (401) that a first physical layer PHY link used for transmitting the synchronization information fails, the second PHY link being a PHY link other than the first PHY link in a FlexE group; wherein
the FlexE group exists between the sending end device and a receiving end device; the FlexE group comprises at least two PHY links;
wherein the method further comprises:
receiving, through a PHY link corresponding to the second PHY link, synchronization information sent by the receiving end device.

2. The synchronization information transmission method according to claim 1, wherein, when switching (402) the synchronization information to the second PHY link for transmission, the method further comprises:
setting a first identifier in an overhead corresponding to the second PHY link, the first identifier being used to indicate that the synchronization information is transmitted via the second PHY link;
and/or,
selecting a PHY link from the FlexE group as the second PHY link according to a link switching rule.

3. The synchronization information transmission method according to claim 1, further comprising:
restoring the synchronization information to the first PHY link for transmission when it is detected that the first PHY link returns to normal.

4. The synchronization information transmission method according to claim 1, wherein that it is detected (401) that a first physical layer PHY link used for transmitting the synchronization information fails comprises:
a fault on the first PHY link is detected; or failure information of the first PHY link, sent by the receiving end device, is received.

5. The synchronization information transmission method according to claim 2, wherein the selecting the PHY link from the FlexE group as the second PHY link according to the link switching rule comprises:
selecting a corresponding PHY link as the second PHY link according to a numbering sequence of PHY links in the FlexE group.

6. A synchronization information transmission method, performed by a receiving end device, the method comprising:
receiving (503), through a second PHY link, synchronization information sent by a sending end device, the synchronization information received through the second PHY link being sent by the sending end device when it is detected that a first PHY link used for transmitting the synchronization information fails, and the second PHY link being a PHY link other than the first PHY link in a FlexE group; wherein
the FlexE group exists between the sending end device and the receiving end device; the FlexE group comprises at least two PHY links;
wherein the method further comprises:
sending synchronization information to the sending end device through a PHY link corresponding to the second PHY link.

7. The synchronization information transmission method according to claim 6, further comprising:
parsing an overhead corresponding to the second PHY link to obtain a first identifier; and
determining, based on the first identifier, that the synchronization information is transmitted via the second PHY link;
and/or,
receiving, through a first PHY link, synchronization information sent by the sending end device, the synchronization information received through the first PHY link being sent by the sending end device when it is detected that the first PHY link returns to normal.

8. The synchronization information transmission method according to claim 6, further comprising:
tracking a port of the FlexE group within a time period from when it is detected that the first PHY link fails to when the synchronization information is switched to the second PHY link for transmission;
or,
prioritizing the tracking of the port of the FlexE group within a time period from when it is detected that the first PHY link fails to when the synchronization information is switched to the second PHY link for transmission in a case that there is a link between the sending end device and the receiving end device other than the FlexE group path.

9. The synchronization information transmission method according to claim 8, wherein the prioritizing the tracking of the port of the FlexE group comprises:
prioritizing the tracking of the port of the FlexE group by setting a wait delay duration; or
prioritizing the tracking of the port of the FlexE group by setting a link priority.

10. The synchronization information transmission method according to claim 6, further comprising:
sending failure information of the first PHY link to the sending end device when a fault on the first PHY link is detected.

11. A sending end device (80), comprising:
a first processor (82);
a first communication interface (81), configured to switch the synchronization information to a second PHY link for transmission under control of the first processor (82) when it is detected that a first PHY link used for transmitting the synchronization information fails, the second PHY link being a PHY link other than the first PHY link in the FlexE group; wherein
the FlexE group exists between the sending end device and the receiving end device; the FlexE group comprises at least two PHY links;
wherein the first communication interface (81) is further configured to receive, through a PHY link corresponding to the second PHY link, synchronization information sent by the receiving end device.

12. The sending end device (80) according to claim 11, wherein the first processor (82) is configured to set a first identifier in an overhead corresponding to the second PHY link; the first identifier is used to indicate that the synchronization information is transmitted via the second PHY link;
and/or,
the first processor (82) is configured to select a PHY link from the FlexE group as the second PHY link according to a link switching rule.

13. A receiving end device (90), comprising
a second processor (92);
a second communication interface (91), configured to, under control of the second processor (92), receive, through a second PHY link, synchronization information sent by a sending end device; the synchronization information received through the second PHY link being sent by the sending end device when it is detected that a first PHY link used for transmitting the synchronization information fails, and the second PHY link being a PHY link other than the first PHY link in a FlexE group; wherein
the FlexE group exists between the sending end device and the receiving end device; the FlexE group comprises at least two PHY links;
wherein the second communication interface (91) is further configured to transmit synchronization information to the sending end device through a PHY link corresponding to the second PHY link.

14. The receiving end device (90) according to claim 13, wherein the second processor (92) is configured to:
parse an overhead corresponding to the second PHY link to obtain a first identifier; and
determine, based on the first identifier, that the synchronization information is transmitted via the second PHY link.

15. The receiving end device (90) according to claim 13, wherein
the second communication interface (91) is further configured to receive, through the first PHY link, synchronization information sent by the sending end device; the synchronization information received through the first PHY link is sent by the sending end device when it is detected that the first PHY link returns to normal;
and/or,
the second communication interface (91) is further configured to send failure information of the first PHY link to the sending end device when a fault on the first PHY link is detected.

## Patentansprüche

1. Synchronisationsinformationssendeverfahren, das von einem Sendeendgerät durchgeführt wird, das Verfahren Folgendes umfassend:
Umschalten (402) von Synchronisationsinformationen auf eine zweite PHY-Verbindung zur Übertragung, wenn erkannt (401) wird, dass eine erste physikalische Schicht einer PHY-Verbindung, die zum Übertragen der Synchronisationsinformationen verwendet wird, fehlschlägt, wobei die zweite PHY-Verbindung eine andere PHY-Verbindung als die erste PHY-Verbindung in einer FlexE-Gruppe ist; wobei
die FlexE-Gruppe zwischen dem Sendeendgerät und einem Empfangsendgerät existiert; die FlexE-Gruppe mindestens zwei PHY-Verbindungen umfasst;
wobei das Verfahren ferner Folgendes umfasst:
Empfangen von Synchronisationsinformationen, die von dem Empfangsendgerät gesendet werden, über eine PHY-Verbindung, die der zweiten PHY-Verbindung entspricht.

2. Synchronisationsinformationssendeverfahren nach Anspruch 1, wobei, wenn die Synchronisationsinformationen auf die zweite PHY-Verbindung zur Übertragung umgeschaltet (402) werden, das Verfahren ferner Folgendes umfasst:
Festlegen eines ersten Identifikators in einem Overhead, der der zweiten PHY-Verbindung entspricht, wobei der erste Identifikator verwendet wird, um anzuzeigen, dass die Synchronisationsinformationen über die zweite PHY-Verbindung übertragen werden;
und/oder
Auswählen einer PHY-Verbindung aus der FlexE-Gruppe als die zweite PHY-Verbindung gemäß einer Verbindungsumschaltregel.

3. Synchronisationsinformationssendeverfahren nach Anspruch 1, ferner umfassend:
Wiederherstellen der Synchronisationsinformationen an die erste PHY-Verbindung zur Übertragung, wenn erkannt wird, dass die erste PHY-Verbindung zur Normalität zurückkehrt.

4. Synchronisationsinformationssendeverfahren nach Anspruch 1, wobei, dass erkannt (401) wird, dass eine erste physikalische Schicht einer PHY-Verbindung, die zum Übertragen der Synchronisationsinformationen verwendet wird, fehlschlägt, Folgendes umfasst:
ein Fehler auf der ersten PHY-Verbindung wird erkannt; oder Fehlerinformationen der ersten PHY-Verbindung, die von dem Empfangsendgerät gesendet werden, werden empfangen.

5. Synchronisationsinformationssendeverfahren nach Anspruch 2, wobei das Auswählen der PHY-Verbindung aus der FlexE-Gruppe als die zweite PHY-Verbindung gemäß der Verbindungsumschaltregel Folgendes umfasst:
Auswählen einer entsprechenden PHY-Verbindung als die zweite PHY-Verbindung gemäß einer Nummerierungssequenz der PHY-Verbindungen in der FlexE-Gruppe.

6. Synchronisationsinformationssendeverfahren, das von einem Empfangsendgerät durchgeführt wird, das Verfahren Folgendes umfassend:
Empfangen (503) von Synchronisationsinformationen über eine zweite PHY-Verbindung, die von einem Sendeendgerät gesendet werden, wobei die über die zweite PHY-Verbindung empfangenen Synchronisationsinformationen von dem Sendeendgerät gesendet werden, wenn erkannt wird, dass eine erste PHY-Verbindung, die zum Übertragen der Synchronisationsinformationen verwendet wird, fehlschlägt und die zweite PHY-Verbindung eine andere PHY-Verbindung als die erste PHY-Verbindung in einer FlexE-Gruppe ist; wobei
die FlexE-Gruppe zwischen dem Sendeendgerät und dem Empfangsendgerät existiert; die FlexE-Gruppe mindestens zwei PHY-Verbindungen umfasst;
wobei das Verfahren ferner Folgendes umfasst:
Senden von Synchronisationsinformationen an das Sendeendgerät über eine PHY-Verbindung, die der zweiten PHY-Verbindung entspricht.

7. Synchronisationsinformationssendeverfahren nach Anspruch 6, ferner umfassend:
Parsen eines Overheads, der der zweiten PHY-Verbindung entspricht, um einen ersten Identifikator zu erhalten; und
Bestimmen, dass die Synchronisationsinformationen über die zweite PHY-Verbindung übertragen werden, basierend auf dem ersten Identifikator;
und/oder
Empfangen von Synchronisationsinformationen über eine erste PHY-Verbindung, die von dem Sendeendgerät gesendet werden, wobei die über die erste PHY-Verbindung empfangenen Synchronisationsinformationen von dem Sendeendgerät gesendet werden, wenn erkannt wird, dass die erste PHY-Verbindung zur Normalität zurückkehrt.

8. Synchronisationsinformationssendeverfahren nach Anspruch 6, ferner umfassend:
Verfolgen eines Ports der FlexE-Gruppe innerhalb eines Zeitraums von wenn erkannt wird, dass die erste PHY-Verbindung fehlschlägt, bis wenn die Synchronisationsinformationen zur Übertragung auf die zweite PHY-Verbindung umgeschaltet werden;
oder
Priorisieren des Verfolgens des Ports der FlexE-Gruppe innerhalb eines Zeitraums von wenn erkannt wird, dass die erste PHY-Verbindung fehlschlägt, bis wenn die Synchronisationsinformationen zur Übertragung auf die zweite PHY-Verbindung umgeschaltet werden, falls eine Verbindung zwischen dem Sendeendgerät und dem Empfangsendgerät anders als der Verlauf der FlexE-Gruppe ist.

9. Synchronisationsinformationssendeverfahren nach Anspruch 8, wobei das Priorisieren des Verfolgens des Ports der FlexE-Gruppe Folgendes umfasst:
Priorisieren des Verfolgens des Ports der FlexE-Gruppe durch Festlegen einer Warteverzögerungsdauer; oder
Priorisieren des Verfolgens des Ports der FlexE-Gruppe durch Festlegen einer Verbindungspriorität.

10. Synchronisationsinformationssendeverfahren nach Anspruch 6, ferner umfassend:
Senden von Fehlerinformationen der ersten PHY-Verbindung an das Sendeendgerät, wenn ein Fehler auf der ersten PHY-Verbindung erkannt wird.

11. Sendeendgerät (80), umfassend:
einen ersten Prozessor (82);
eine erste Kommunikationsschnittstelle (81), die dazu konfiguriert ist, die Synchronisationsinformationen unter Steuerung des ersten Prozessors (82) auf eine zweite PHY-Verbindung zur Übertragung umzuschalten, wenn erkannt wird, dass eine erste PHY-Verbindung, die zum Übertragen der Synchronisationsinformationen verwendet wird, fehlschlägt, wobei die zweite PHY-Verbindung eine andere PHY-Verbindung als die erste PHY-Verbindung in der FlexE-Gruppe ist; wobei
die FlexE-Gruppe zwischen dem Sendeendgerät und dem Empfangsendgerät existiert; die FlexE-Gruppe mindestens zwei PHY-Verbindungen umfasst;
wobei die erste Kommunikationsschnittstelle (81) ferner dazu konfiguriert ist, Synchronisationsinformationen, die von dem Empfangsendgerät gesendet werden, über eine PHY-Verbindung, die der zweiten PHY-Verbindung entspricht, zu empfangen.

12. Sendeendgerät (80) nach Anspruch 11, wobei der erste Prozessor (82) dazu konfiguriert ist, einen ersten Identifikator in einem Overhead festzulegen, der der zweiten PHY-Verbindung entspricht; der erste Identifikator verwendet wird, um anzuzeigen, dass die Synchronisationsinformationen über die zweite PHY-Verbindung übertragen werden;
und/oder
der erste Prozessor (82) dazu konfiguriert ist, eine PHY-Verbindung aus der FlexE-Gruppe als die zweite PHY-Verbindung gemäß der Verbindungsumschaltregel auszuwählen.

13. Empfangsendgerät (90), umfassend:
einen zweiten Prozessor (92);
eine zweite Kommunikationsschnittstelle (91), die dazu konfiguriert ist, Synchronisationsinformationen, die von einem Sendeendgerät gesendet werden, über eine zweite PHY-Verbindung unter Steuerung des zweiten Prozessors (92) zu empfangen; die über die zweite PHY-Verbindung empfangenen Synchronisationsinformationen, die von dem Sendeendgerät gesendet werden, wenn erkannt wird, dass eine erste PHY-Verbindung, die zum Übertragen der Synchronisationsinformationen verwendet wird, fehlschlägt und die zweite PHY-Verbindung eine andere PHY-Verbindung als die erste PHY-Verbindung in einer FlexE-Gruppe ist; wobei
die FlexE-Gruppe zwischen dem Sendeendgerät und dem Empfangsendgerät existiert; die FlexE-Gruppe mindestens zwei PHY-Verbindungen umfasst;
wobei die zweite Kommunikationsschnittstelle (91) ferner dazu konfiguriert ist, Synchronisationsinformationen über eine PHY-Verbindung, die der zweiten PHY-Verbindung entspricht, an das Sendeendgerät zu übertragen.

14. Empfangsendgerät (90) nach Anspruch 13, wobei der zweite Prozessor (92) zu Folgendem konfiguriert ist:
Parsen eines Overheads, der der zweiten PHY-Verbindung entspricht, um einen ersten Identifikator zu erhalten; und
Bestimmen, dass die Synchronisationsinformationen über die zweite PHY-Verbindung übertragen werden, basierend auf dem ersten Identifikator.

15. Empfangsendgerät (90) nach Anspruch 13, wobei
die zweite Kommunikationsschnittstelle (91) ferner dazu konfiguriert ist, Synchronisationsinformationen über die erste PHY-Verbindung, die von dem Sendeendgerät gesendet werden, zu empfangen; die über die erste PHY-Verbindung empfangenen Synchronisationsinformationen von dem Sendeendgerät gesendet werden, wenn erkannt wird, dass die erste PHY-Verbindung zur Normalität zurückkehrt;
und/oder
die zweite Kommunikationsschnittstelle (91) ferner dazu konfiguriert ist, Fehlerinformationen der ersten PHY-Verbindung an das Sendeendgerät zu senden, wenn ein Fehler auf der ersten PHY-Verbindung erkannt wird.

## Revendications

1. Procédé de transmission d'informations de synchronisation, réalisé par un dispositif terminal d'envoi, le procédé comprenant :
la commutation (402) d'informations de synchronisation vers une seconde liaison PHY pour transmission lorsqu'il est détecté (401) qu'une première liaison de couche physique PHY utilisée pour transmettre les informations de synchronisation est défaillante, la seconde liaison PHY étant une liaison PHY autre que la première liaison PHY dans un groupe FlexE ; dans lequel
le groupe FlexE existe entre le dispositif terminal d'envoi et un dispositif terminal de réception ; le groupe FlexE comprend au moins deux liaisons PHY ;
dans lequel le procédé comprend en outre :
la réception, via une liaison PHY correspondant à la seconde liaison PHY, d'informations de synchronisation envoyées par le dispositif terminal de réception.

2. Procédé de transmission d'informations de synchronisation selon la revendication 1, dans lequel, lors de la commutation (402) des informations de synchronisation vers la seconde liaison PHY pour transmission, le procédé comprend en outre :
la définition d'un premier identifiant dans une surcharge correspondant à la seconde liaison PHY, le premier identifiant étant utilisé pour indiquer que les informations de synchronisation sont transmises via la seconde liaison PHY ;
et/ou,
la sélection d'une liaison PHY du groupe FlexE comme seconde liaison PHY selon une règle de commutation de liaison.

3. Procédé de transmission d'informations de synchronisation selon la revendication 1, comprenant en outre :
la restauration des informations de synchronisation sur la première liaison PHY pour transmission lorsqu'il est détecté que la première liaison PHY redevient normale.

4. Procédé de transmission d'informations de synchronisation selon la revendication 1, dans lequel le fait qu'il soit détecté (401) qu'une première liaison de couche physique PHY utilisée pour transmettre les informations de synchronisation est défaillante comprend :
la détection d'une panne sur la première liaison PHY ; ou la réception d'informations de défaillance de la première liaison PHY, envoyées par le dispositif terminal de réception.

5. Procédé de transmission d'informations de synchronisation selon la revendication 2, dans lequel la sélection de la liaison PHY du groupe FlexE comme seconde liaison PHY selon la règle de commutation de liaison comprend :
la sélection d'une liaison PHY correspondante comme seconde liaison PHY selon une séquence de numérotation de liaisons PHY dans le groupe FlexE.

6. Procédé de transmission d'informations de synchronisation, réalisé par un dispositif terminal de réception, le procédé comprenant :
la réception (503), via une seconde liaison PHY, d'informations de synchronisation envoyées par un dispositif terminal d'envoi, les informations de synchronisation reçues via la seconde liaison PHY étant envoyées par le dispositif terminal d'envoi lorsqu'il est détecté qu'une première liaison PHY utilisée pour transmettre les informations de synchronisation est défaillante, et la seconde liaison PHY étant une liaison PHY autre que la première liaison PHY dans un groupe FlexE ; dans lequel
le groupe FlexE existe entre le dispositif terminal d'envoi et le dispositif terminal de réception ; le groupe FlexE comprend au moins deux liaisons PHY ;
dans lequel le procédé comprend en outre :
l'envoi d'informations de synchronisation au dispositif terminal d'envoi via une liaison PHY correspondant à la seconde liaison PHY.

7. Procédé de transmission d'informations de synchronisation selon la revendication 6, comprenant en outre :
l'analyse d'une surcharge correspondant à la seconde liaison PHY pour obtenir un premier identifiant ; et
la détermination, sur la base du premier identifiant, du fait que les informations de synchronisation sont transmises via la seconde liaison PHY ;
et/ou,
la réception, via une première liaison PHY, d'informations de synchronisation envoyées par le dispositif terminal d'envoi, les informations de synchronisation reçues via la première liaison PHY étant envoyées par le dispositif terminal d'envoi lorsqu'il est détecté que la première liaison PHY redevient normale.

8. Procédé de transmission d'informations de synchronisation selon la revendication 6, comprenant en outre :
le suivi d'un port du groupe FlexE pendant une période allant du moment où il est détecté que la première liaison PHY est défaillante jusqu'au moment où les informations de synchronisation sont commutées vers la seconde liaison PHY pour transmission ;
ou,
la priorisation du suivi du port du groupe FlexE pendant une période allant du moment où il est détecté que la première liaison PHY est défaillante jusqu'au moment où les informations de synchronisation sont commutées vers la seconde liaison PHY pour transmission, dans le cas où il existe une liaison entre le dispositif terminal d'envoi et le dispositif terminal de réception autre que le chemin de groupe FlexE.

9. Procédé de transmission d'informations de synchronisation selon la revendication 8, dans lequel la priorisation du suivi du port du groupe FlexE comprend :
la priorisation du suivi du port du groupe FlexE en définissant une durée de délai d'attente ; ou
la priorisation du suivi du port du groupe FlexE en définissant une priorité de liaison.

10. Procédé de transmission d'informations de synchronisation selon la revendication 6, comprenant en outre :
l'envoi d'informations de défaillance de la première liaison PHY au dispositif terminal d'envoi lorsqu'une panne est détectée sur la première liaison PHY.

11. Dispositif terminal d'envoi (80), comprenant :
un premier processeur (82) ;
une première interface de communication (81), configurée pour commuter les informations de synchronisation vers une seconde liaison PHY pour transmission sous le contrôle du premier processeur (82) lorsqu'il est détecté qu'une première liaison PHY utilisée pour transmettre les informations de synchronisation est défaillante, la seconde liaison PHY étant une liaison PHY autre que la première liaison PHY dans le groupe FlexE ; dans lequel
le groupe FlexE existe entre le dispositif terminal d'envoi et le dispositif terminal de réception ; le groupe FlexE comprend au moins deux liaisons PHY ;
dans lequel la première interface de communication (81) est en outre configurée pour recevoir, via une liaison PHY correspondant à la seconde liaison PHY, des informations de synchronisation envoyées par le dispositif terminal de réception.

12. Dispositif terminal d'envoi (80) selon la revendication 11, dans lequel le premier processeur (82) est configuré pour définir un premier identifiant dans une surcharge correspondant à la seconde liaison PHY ; le premier identifiant est utilisé pour indiquer que les informations de synchronisation sont transmises via la seconde liaison PHY ;
et/ou,
le premier processeur (82) est configuré pour sélectionner une liaison PHY du groupe FlexE comme seconde liaison PHY selon une règle de commutation de liaison.

13. Dispositif terminal de réception (90), comprenant :
un second processeur (92) ;
une seconde interface de communication (91), configurée pour recevoir, sous le contrôle du second processeur (92), via une seconde liaison PHY, des informations de synchronisation envoyées par un dispositif terminal d'envoi ; les informations de synchronisation reçues via la seconde liaison PHY étant envoyées par le dispositif terminal d'envoi lorsqu'il est détecté qu'une première liaison PHY utilisée pour transmettre les informations de synchronisation est défaillante, et la seconde liaison PHY étant une liaison PHY autre que la première liaison PHY dans un groupe FlexE ; dans lequel
le groupe FlexE existe entre le dispositif terminal d'envoi et le dispositif terminal de réception ; le groupe FlexE comprend au moins deux liaisons PHY ;
dans lequel la seconde interface de communication (91) est en outre configurée pour transmettre des informations de synchronisation au dispositif terminal d'envoi via une liaison PHY correspondant à la seconde liaison PHY.

14. Dispositif terminal de réception (90) selon la revendication 13, dans lequel le second processeur (92) est configuré pour :
analyser une surcharge correspondant à la seconde liaison PHY pour obtenir un premier identifiant ; et
déterminer, sur la base du premier identifiant, que les informations de synchronisation sont transmises via la seconde liaison PHY.

15. Dispositif terminal de réception (90) selon la revendication 13, dans lequel
la seconde interface de communication (91) est en outre configurée pour recevoir, via la première liaison PHY, des informations de synchronisation envoyées par le dispositif terminal d'envoi ; les informations de synchronisation reçues via la première liaison PHY sont envoyées par le dispositif terminal d'envoi lorsqu'il est détecté que la première liaison PHY redevient normale ;
et/ou,
la seconde interface de communication (91) est en outre configurée pour envoyer des informations de défaillance de la première liaison PHY au dispositif terminal d'envoi lorsqu'une panne sur la première liaison PHY est détectée.
